# EUROPEAN PATENT APPLICATION

(11) **EP 4 339 493 A1**
(43) Date of publication of application: **20.03.2024**
(21) Application number: 23791560.8
(22) Date of filing: 08.03.2023
(51) Int. Cl.: F16K 31/04, F16K 37/00, F25B 41/35

(54) **CONTROL DEVICE FOR MOTOR-OPERATED VALVE, MOTOR-OPERATED VALVE, AND MOTOR-OPERATED VALVE UNIT USING SAME**

(30) Priority: 19.04.2022 JP 2022068896
(71) Applicant: Fujikoki Corporation, Tokyo 158-0082 (JP)
(72) Inventor: ISHIZUKA, Yusuke, Tokyo 158-0082 (JP); NARUKAWA, Bunta, Tokyo 158-0082 (JP)
(74) Representative: Ter Meer Steinmeister & Partner
(86) International application number: PCT/JP2023/008697
(87) International publication number: WO 2023/203905

(57) **Abstract**

Provided is a control apparatus of an electrically driven valve capable of performing an appropriate flow rate control by changing control of a stepping motor according to an amount of hysteresis, an electrically driven valve, and an electrically driven valve unit utilizing the same.

An electrically driven valve includes a valve element configured to move to a direction approaching a valve seat or to a direction separating therefrom, a stepping motor configured to be operated by entering a drive pulse, a driving mechanism configured to drive the valve element by a driving force output from the stepping motor, a nonvolatile storage unit configured to store an amount of hysteresis, and a control unit configured to drive the stepping motor according to an operation instruction information entered from an exterior. Based on the operation instruction information entered from the exterior, when moving the valve element to a direction that differs from a direction of movement immediately prior thereto, the control unit enters to the stepping motor a drive pulse of an effective number of pulses having added a number of pulses corresponding to the amount of hysteresis stored in the storage unit to a target number of pulses corresponding to a target movement amount of the valve element.

## Description

### [Technical Field]

The present invention relates to a control apparatus of an electrically driven valve, an electrically driven valve, and an electrically driven valve unit using the same.

### [Background Art]

Heretofore, in refrigeration cycle systems adopted in air conditioning devices, refrigerating/freezing showcases and so on, electrically driven valves that operate a valve element by a stepping motor are used to control a flow rate of circulating refrigerant with the aim to stabilize cooling capacity and maintain a constant degree of superheat to realize efficient operation.

In controlling such electrically driven valves, normally, when power is turned on, initialization processing (also referred to as origin point positioning, base point positioning, or initialization) is executed, and positioning of the valve element is performed before opening control is started (refer for example to Patent Literature 1). In the document, initialization processing refers to a process of sufficiently rotating a stepping motor to a valve closing direction or a valve opening direction for a number of pulses that exceeds an entire stroke from a fully opened position to a fully closed position or from a fully closed position to a fully opened position, or more specifically, for a number of pulses by which a rotor of the stepping motor collides against a rotation stopper called a stopper without fail and stops rotating, according to which an initial position of the electrically driven valve corresponding to zero pulses or maximum pulses may be determined.

### [Citation List]

### [Patent Literature]

[Patent Literature 1] Publication of Japanese Patent No. 4032993

### [Summary of Invention]

### [Problem to be Solved by the Invention]

Generally, in a common electrically driven valve, a rotational movement of a rotor of a stepping motor is converted into an axial direction movement to drive the valve element in the axial direction. Further, in some electrically driven valves, the rotational movement of the rotor is reduced using a gear before being converted into an axial direction movement to drive the valve element. In such an electrically driven valve, in a state where the direction of rotation reverses from the valve opening direction to the valve closing direction or from the valve closing direction to the valve opening direction, there is a drawback that the valve element cannot be positioned at a target position with high accuracy due to a hysteresis caused by a backlash that exists in a power transmission path. In order to position the valve element to the target position with high accuracy, it is necessary to obtain the amount of hysteresis and correct the number of pulses of drive based thereon, but in reality, it is difficult to obtain the amount of hysteresis with high accuracy.

The present invention aims at providing a control apparatus of an electrically driven valve capable of realizing appropriate flow rate control, the electrically driven valve, and an electrically driven valve unit using the same, by changing the control of the stepping motor according to the amount of hysteresis.

### [Means to Solve the Problem]

In order to achieve the object described above, a control apparatus of an electrically driven valve according to the present invention includes
a valve element configured to move to a direction approaching a valve seat or to a direction separating therefrom, a stepping motor configured to be operated by entering a drive pulse, a driving mechanism configured to drive the valve element by a driving force output from the stepping motor, a nonvolatile storage unit, and a control unit configured to drive the stepping motor according to an operation instruction information entered from an exterior,
wherein the storage unit is configured to store an amount of hysteresis, and
wherein, based on the operation instruction information entered from the exterior, when moving the valve element to a direction that differs from a direction of movement immediately prior thereto, the control unit enters to the stepping motor a drive pulse of an effective number of pulses having added a number of pulses corresponding to the amount of hysteresis stored in the storage unit to a target number of pulses corresponding to a target movement amount of the valve element.

According to the present invention, an electrically driven valve includes
a valve element configured to move to a direction approaching a valve seat or to a direction separating therefrom, a stepping motor configured to be operated by entering a drive pulse, a driving mechanism configured to drive the valve element by a driving force output from the stepping motor, a nonvolatile storage unit, and a control unit configured to drive the stepping motor according to an operation instruction information entered from an exterior,
wherein the storage unit is configured to store an amount of hysteresis, and
wherein, based on the operation instruction information entered from the exterior, when moving the valve element to a direction that differs from a direction of movement immediately prior thereto, the control unit enters to the stepping motor a drive pulse of an effective number of pulses having added a number of pulses corresponding to the amount of hysteresis stored in the storage unit to a target number of pulses corresponding to a target movement amount of the valve element.

An invention of a product regarding the electrically driven valve according to the present invention described above may be considered as being specified by a so-called product-by-process form. An electrically driven valve in which the amount of hysteresis is stored may be difficult to judge from a product. Therefore, a condition exists where it is impossible, or not practical, to specify the product directly by its structure or characteristics ("impossible / impractical case")

### [Effects of Invention]

The present invention enables to provide a control apparatus of an electrically driven valve capable of realizing an appropriate flow rate control, an electrically driven valve, and an electrically driven valve unit using the same, by changing the control of the stepping motor according to the amount of hysteresis.

### [Brief Description of Drawings]

[FIG. 1] FIG. 1 is a vertical cross-sectional view illustrating a valve closed state of an electrically driven valve according to a present embodiment, together with a schematic configuration diagram of a control apparatus and an inspection apparatus.
[FIG. 2] FIG. 2 is a planar view of a reduction unit of the electrically driven valve.
[FIG. 3] FIG. 3 is a flowchart illustrating a flow of measurement of an amount of hysteresis of the electrically driven valve.
[FIG. 4] FIG. 4 is a hysteresis diagram illustrating a relationship between a drive pulse entered to a stepping motor of the electrically driven valve and a flow rate.
[FIG. 5] FIG. 5 is a hysteresis diagram illustrating a relationship between the drive pulse entered to the stepping motor of the electrically driven valve and the flow rate.
[FIG. 6] FIG. 6 is a hysteresis diagram illustrating a relationship between the drive pulse entered to the stepping motor of the electrically driven valve and the flow rate.
[FIG. 7] FIG. 7 is a graph associating an integrated value of drive pulse and an amount of hysteresis.
[FIG. 8] FIG. 8 is a hysteresis diagram according to a modified example of the present embodiment.
[FIG. 9] FIG. 9 is a hysteresis diagram according to a modified example of the present embodiment.

### [Description of Embodiments]

An electrically driven valve 1, a control apparatus 100, and an inspection apparatus 200 according to the present invention will be described with reference to the drawings. The electrically driven valve 1 according to the present embodiment is installed within a circulation path of a refrigeration cycle apparatus to control a flow rate of a refrigerant flowing in the circulation path. The electrically driven valve 1 and the control apparatus 100 constitute an electrically driven valve unit, and the control apparatus 100 and the inspection apparatus 200 constitute a measurement apparatus of the electrically driven valve 1.

### (Electrically Driven Valve)

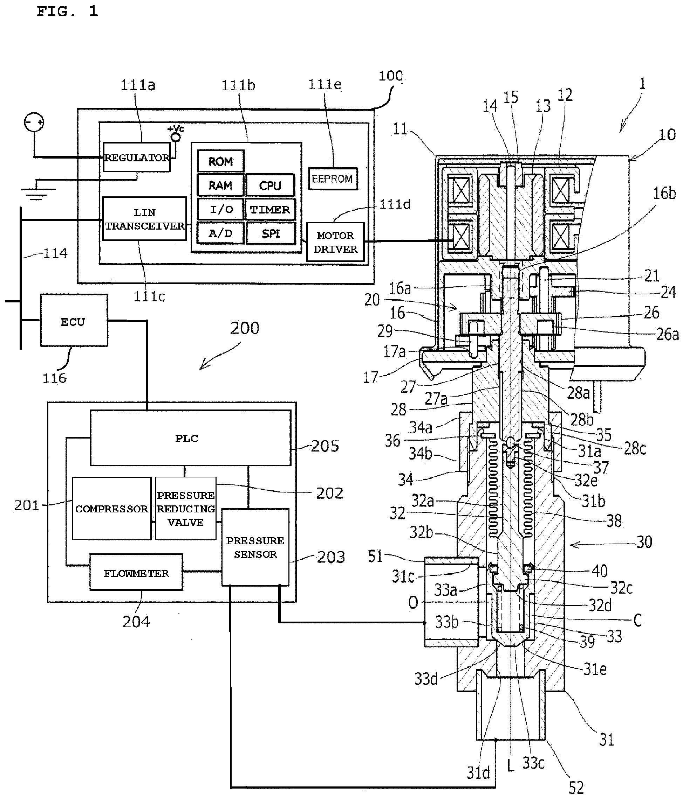

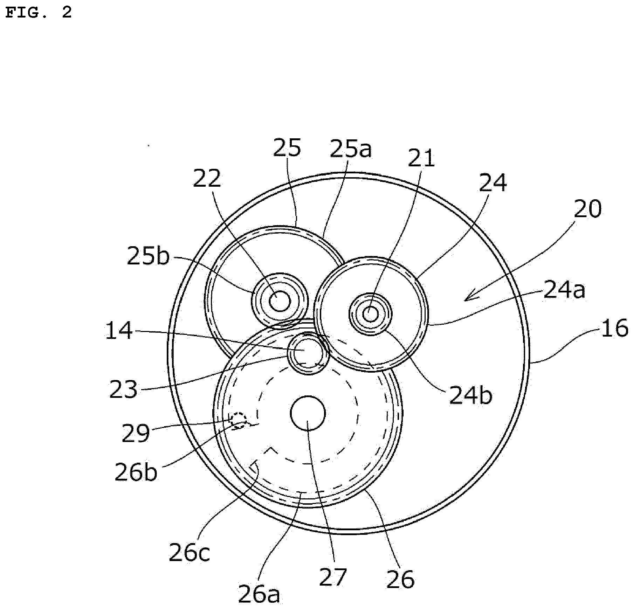

FIG. 1 is a vertical cross-sectional view illustrating a valve closed state of the electrically driven valve 1 according to the present embodiment, combined with a schematic configuration diagram of the control apparatus 100 and the inspection apparatus 200. FIG. 2 is a planar view of a reduction unit 20 of the electrically driven valve 1. The electrically driven valve 1 and the control apparatus 100 are assembled to the refrigeration cycle apparatus as a specific combination. The electrically driven valve 1 will be described with reference to FIG. 1.

### (Configuration of Electrically Driven Valve)

The electrically driven valve 1 includes a driving unit 10, a reduction unit 20, and a valve mechanism unit 30. An axis line of the valve mechanism unit 30 is referred to as L. Further, a side on which a motor is arranged is referred to as an upper side, and a side on which a valve element is arranged is referred to as a lower side.

At first, the driving unit 10 will be described. In the drawing, the driving unit 10 includes a driving unit case 11, a stator 12 attached to an inner side of the driving unit case 11, a rotor 13 arranged on an inner side in a radial direction of the stator 12, and a drive shaft 14 fixed to the rotor 13. The stator 12 and the rotor 13 constitute a stepping motor. The stepping motor is a motor that receives input of a drive pulse, and rotates a rotor highly accurately for a rotation angle corresponding to the drive pulse that has been entered.

The driving unit case 11 is formed in the shape of a cylinder with a top part, and a bearing 15 is fixed to a lower surface at a center of the top part. The bearing 15 retains the drive shaft 14 rotatably. A support cylinder 16 formed in the shape of a cylinder with a top part is disposed so as to fit to an inner circumference of the driving unit case 11 at a lower side of the stator 12 and the rotor 13. A lower end of the support cylinder 16 is in contact with an upper surface of an annular member 17 covering the driving unit case 11, and the lower end of the driving unit case 11 and an outer circumference of the annular member 17 are fixed by crimping.

The support cylinder 16 includes a hollow cylinder portion 16a formed on a lower surface at a center of the top part, and a through hole (not shown). A lower end of the drive shaft 14 passes through the through hole of the support cylinder 16 and is rotatably supported on the through hole.

Next, the reduction unit 20 will be described.

The reduction unit 20 includes a first shaft 21 and a second shaft 22 each having both ends thereof retained by a lower surface of the top part of the support cylinder 16 and an upper surface of the annular member 17, a drive gear 23 fixed to a lower end of the drive shaft 14 passing through the through hole of the support cylinder 16, a first transmission gear 24 retained rotatably to the first shaft 21, a second transmission gear 25 retained rotatably to the second shaft 22, a final gear 26, a male screw shaft 27, and a female screw cylinder 28. The male screw shaft 27 is press-fit to and integrated with the final gear 26.

The first shaft 21 and the second shaft 22 are arranged in parallel with the drive shaft 14. The first transmission gear 24 is formed by coaxially connecting a first input gear portion 24a meshing with the drive gear 23 and a first output gear portion 24b. The second transmission gear 25 is formed by coaxially connecting a second input gear portion 25a meshing with the first output gear portion 24b and a second output gear portion 25b meshing with the final gear 26. The respective shafts may be made of metal and the respective gears may be made of resin. The drive gear 23, the first transmission gear 24, the second transmission gear 25, and the final gear 26 constitute a gear train. The reduction unit 20 should be configured to reduce a driving force entered to the drive shaft 14 (or input shaft) and to output the same to the final gear 26 (or the male screw shaft 27, or output shaft), and is not limited to the above-described configuration. For example, it may adopt a reduction apparatus with planetary gears.

With reference to FIG. 2, the final gear 26 includes an arc-shaped groove 26a formed on a lower surface thereof so as to surround the male screw shaft 27. One end in a circumferential direction of the arc-shaped groove 26a is referred to as an end portion 26b, and the other end thereof is referred to as an end portion 26c. An angle from the end portion 26b to the end portion 26c is set to a predetermined value.

In FIGs. 1 and 2, a hole 17a is formed on an upper surface of the annular member 17, and a lower end of a pin 29 is fit and fixed to the hole 17a. Further, an upper end of the pin 29 is arranged to be positioned within the arc-shaped groove 26a.

The male screw shaft 27 is arranged such that the upper end thereof is fit to an inner circumference of the hollow cylinder portion 16a of the support cylinder 16, and it is arranged in a manner capable of being relatively rotated and displaced in an axial direction within the hollow cylinder portion 16a. Further, the final gear 26 is fit and fixed at an intermediate position of the male screw shaft 27, and a male screw 27a is formed on an outer circumference of a lower end side of the male screw shaft 27.

The female screw cylinder 28 having a hollow cylindrical shape is fit and fixed to an inner circumference of the annular member 17 at an upper end side that is reduced in diameter, and includes a through hole 28a formed to pass through along an axis line L. A female screw 28b engaged with the male screw 27a is formed to a lower end side of the through hole 28a. The female screw cylinder 28 is fixed to the annular member 17, such that when the male screw shaft 27 rotates, the male screw 27a is moved in screwing motion with respect to the female screw 28b, and thereby, an axial direction force is applied from the female screw cylinder 28. Thereby, the male screw shaft 27 is displaced in an axial direction for an amount corresponding to its own rotation angle. The male screw shaft 27 and the female screw cylinder 28 constitute a conversion mechanism. The gear train and the conversion mechanism constitute a driving mechanism.

The female screw cylinder 28 includes a thin cylinder portion 28c enlarged in diameter on a lower end thereof. Further, a cylindrical coupling member 34 is arranged on an outer circumference of the female screw cylinder 28. The coupling member 34 includes an upper end portion 34a that is reduced in diameter fits to the outer circumference of the female screw cylinder 28, and an internal screw portion 34b on an inner circumference of the lower end thereof.

Next, the valve mechanism unit 30 will be described.

The valve mechanism unit 30 includes a valve body 31, a valve stem 32, and a valve element 33.

The valve body 31 made of metal has a relatively thick hollow cylindrical shape, including a reduced diameter portion 31a on an outer circumference at an upper end thereof, and an outer screw portion 31b on the outer circumference at a lower side of the reduced diameter portion 31a. The thin cylinder portion 28c fits to the outer circumference of the reduced diameter portion 31a. By screwing the internal screw portion 34b of the coupling member 34 fit to the outer circumference of the female screw cylinder 28 to the outer screw portion 31b and by engaging the coupling member 34 thereto, the lower surface of the upper end portion 34a being reduced in diameter comes into contact with and fits to a stepped portion at an upper end of the thin cylinder portion 28c. Thereby, the female screw cylinder 28 can be coupled and fixed to the valve body 31.

A spacer 35 is arranged between a lower surface of the female screw cylinder 28 at an inner circumference of the thin cylinder portion 28c and an upper end of the valve body 31, by which a distance between the valve body 31 and the female screw cylinder 28 when the members are being coupled and fixed may be adjusted.

A first piping 51 forming a first flow path arranged orthogonal to the axis line L is connected to an opening 31c formed to an outer circumference in the vicinity of the lower end of the valve body 31. An axis line of the first piping 51 is referred to as O.

An opening formed coaxially with the axis line L at a lower end of the valve body 31 constitutes an orifice 31d. Further, an upper end of the orifice 31d constitutes a valve seat 31e. A second piping 52 is connected to the valve body 31 so as to pass through the orifice 31d.

The valve stem 32 is arranged on an inner side of the valve body 31. The valve stem 32 is formed by coaxially consecutively connecting a small diameter portion 32a, a large diameter portion 32b, a flange portion 32c, and a small-diameter protruded portion 32d. A ball retaining portion 32e which is formed as a separate member as the valve stem 32 is attached to an upper end of the small diameter portion 32a facing a lower end of the male screw shaft 27. A ball 37 made of metal is arranged between a recessed portion at a center of a lower end of the male screw shaft 27 and a recessed portion at a center of an upper end of the ball retaining portion 32e.

An annular plate 36 is fixed by crimping to the inner circumference of the upper end of the valve body 31. A bellows 38 made of metal connects the lower surface of the annular plate 36 and the outer circumference of the upper end of the large diameter portion 32b of the valve stem 32 in a manner covering the small diameter portion 32a of the valve stem 32. Therefore, during use of the electrically driven valve 1, an outer side of the bellows 38 will be in contact with the refrigerant at the inner side of the valve body 31, and an inner side of the bellows 38 will be in contact with air. The outer side of the bellows 38 in the inner side of the valve body 31 constitutes a valve chamber C.

The valve element 33 having a bottomed cylinder shape is arranged at a lower side of the valve stem 32. The valve element 33 is formed by consecutively connecting a large cylinder portion 33a on an upper end side that is movable in sliding motion against the inner circumference of the valve body 31, a small cylinder portion 33b on a lower end side, and a bottom portion 33c. A tapered surface 33d that is axisymmetric to the axis line L is formed on a lower surface side of the bottom portion 33c. An upper end of the large cylinder portion 33a is fixed by crimping to the outer circumference of an annular slide plate 40. The slide plate 40 is fit slidably along the direction of the axis line L to the large diameter portion 32b of the valve stem 32, and it is prevented from moving further toward the lower side of the valve step 32 by coming into contact with the flange portion 32c. The valve stem 32 and the valve element 33 are relatively displaceable for a predetermined distance in the axial direction.

A coil spring 39 serving as an urging member is arranged on an inner circumference side of the small cylinder portion 33b of the valve element 33. An upper end of the coil spring 39 comes into contact with a lower end of the valve stem 32 in a circumference of the small-diameter protruded portion 32d, and a lower end of the coil spring 39 comes into contact with an upper surface of the bottom portion 33c of the valve element 33. Therefore, the valve element 33 is constantly urged downward with respect to the valve stem 32 by the coil spring 39.

Next, the control apparatus 100 will be described.

The control apparatus 100 constitutes an electrically driven valve unit suitable for application to a refrigeration cycle together with the electrically driven valve 1 by being attached to the electrically driven valve 1, and it is used, for example, as an electrically driven valve (expansion valve) of an air conditioner mounted on a vehicle. In a state where the electrically driven valve unit is used as the air conditioner for a vehicle, the control apparatus 100 of the electrically driven valve unit is connected to a communication cable controlling the air conditioner for a vehicle, and performs drive control of the electrically driven valve based on an instruction from a control apparatus of an air conditioning system (air-conditioning ECU).

Further, when determining a valve opening pulse or an amount of hysteresis as described later, the control apparatus 100 is connected to the inspection apparatus 200 and constitutes a measurement apparatus of the electrically driven valve 1. In an inspection (shipping inspection) performed when shipping the completed electrically driven valve 1 from a factory, the control apparatus 100 is connected to the inspection apparatus 200 and receives input of various measurement data in a nonvolatile memory (EEPROM 111e). In that case, drive control of the electrically driven valve 1 is performed according to an instruction from a control apparatus (ECU) of the inspection apparatus 200.

The control apparatus 100 is connected to a power supply, and is further connected to a communication line of the inspection apparatus 200 in the factory or a refrigeration cycle of a vehicle. In a case where the control apparatus constitutes a measurement apparatus of the electrically driven valve 1, for example, the control apparatus 100 is connected to a communication line of a network such as a LAN within the factory or a communication cable for communication with the inspection apparatus. In a case where the control apparatus constitutes an electrically driven valve unit, the control apparatus 100 is connected to a communication line (such as a communication bus of a LIN bus (or CAN bus or Flex Ray bus) 114) that controls an air conditioning system on a vehicle and the like. The control apparatus 100 operates as a slave node of the inspection apparatus 200 or the air conditioning system. When connected to the inspection apparatus 200, the control apparatus 100 receives a command such as the number of pulses of the stepping motor of the electrically driven valve 1 or a signal instructing an initializing operation through a communication signal transmitted from an ECU 116 constituting a portion of the inspection apparatus 200, and controls the opening (valve opening) of the electrically driven valve 1. In the following description, a LIN bus is described as an example of the communication bus, but communication buses other than the LIN may also be used.

The communication system between the ECU 116 and the control apparatus 100 may be, for example, an input/output to a serial interface (such as LIN communication, CAN communication or Flex Ray communication, hereinafter referred to as LIN communication, etc.), an input/output to an I/O port using a digital signal (such as an ON-OFF signal), and an input/output using a wireless communication (such as Wi-Fi (Registered Trademark), and Bluetooth (Registered Trademark)), and the communication system is not limited to the LIN communication. However, in FIG. 1, reception of a power cutoff signal, reception of a sleep mode transition signal, transmission of a power cutoff enabled signal, and transmission of a sleep mode transition enabled signal used for controlling the control apparatus 100 are performed through LIN communication. As described, by utilizing the LIN communication etc. which is an existing vehicle-mounted LAN, there will be no need to attach a new signal line for transmission and reception.

The control apparatus 100 is composed by mounting, on a substrate not shown, a regulator 111a that generates a power +Vc (such as +5 Vdc) that is used in a circuit inside the control apparatus 100 mainly from a power supply, a microcomputer (control unit) 111b serving as an operation unit equipped with a ROM storing a program etc. for controlling the rotation of the stepping motor of the electrically driven valve based on a LIN communication signal transmitted from the ECU 116 via the LIN bus 114, a CPU for executing programs stored in the ROM or performing arithmetic processing, a RAM for temporarily storing data necessary for executing programs such as a state of the initializing operation or communication data, an I/O circuit for performing input and output with peripheral circuits, a timer for measuring time of an interrupt processing, etc., and an A/D converter for converting analog signals into digital values, a LIN transceiver 111c serving as a transmission and reception unit that is connected to the LIN bus 114, that converts the voltage level of the LIN bus 114 to a circuit voltage level within the control apparatus 100 and that enables to realize LIN communication with the microcomputer 111b, a stepping motor driver 111d for outputting a drive pulse to control the rotation of the stepping motor of the electrically driven valve 1 based on a control signal from the microcomputer 111b, and an EEPROM (nonvolatile storage unit) 111e serving as a nonvolatile memory that is connected to the microcomputer 111b and that serves as a storage unit for storing data (such as a valve opening information related to a current valve opening of the electrically driven valve 1, a rotational direction thereof, or an abnormal termination flag described later), among the RAM data in the microcomputer 111b, that is required to be retained even when the power has been turned off.

Further, an IC in which two or more of the regulator 111a, the LIN transceiver 111c, the stepping motor driver 111d, the EEPROM 111e, and the microcomputer 111b are integrally configured may be used, and in such case, the apparatus may be downsized even further.

The actual configuration of the control apparatus 100 is not limited to the configuration described above, and any configuration may be adopted as long as the present invention is executable.

### (Inspection Apparatus)

The inspection apparatus 200 includes, in addition to the ECU 116, a compressor 201, a pressure reducing valve 202, a pressure sensor 203, a flowmeter 204, and a programmable logic controller (PLC) 205 that controls the same. These are connected to the ECU 116 via a communication bus (such as a CAN or a RS 232C). The following description is based on an assumption that the inspection apparatus 200 is an inspection apparatus for an inspection process that is performed when shipping the completed electrically driven valve 1 from a factory, but a similar inspection process may be performed in a state where the electrically driven valve unit is assembled to the refrigeration cycle apparatus if there is an apparatus capable of measuring the flow rate of the refrigeration cycle apparatus to which the electrically driven valve unit is installed.

The compressor 201 compresses air, and the compressed air is decompressed to a constant pressure by the pressure reducing valve 202 that operates under the control of the PLC 205 and supplied to a piping 51 of the electrically driven valve 1. In this state, the air pressure supplied to the piping 51 is measured by the pressure sensor 203, the measurement signal of which is entered to the PLC 205 to check whether the pressure is constant, and if the pressure is not constant, the PLC 205 controls the pressure reducing valve 202 so that the pressure becomes constant.

Meanwhile, the flowmeter 204 is connected to a piping 52 to measure the amount of air that has passed through the gap between the valve seat 31e and the valve element 33, and outputs the measurement signal to the control apparatus 100 through the ECU 116. In the description, air is used for measuring the flow rate, but the flow rate may also be measured using a refrigerant.

As an initial position of the electrically driven valve 1, for example, a zero pulse must be determined. When the control apparatus 100 is connected to the inspection apparatus 200, the ECU 116 may transmit a command (initialization instruction signal) to execute an initializing operation of rotating the stepping motor of the electrically driven valve 1 to a maximum number of pulses or more in the valve closing direction via the LIN bus 114 using a LIN communication signal to the control apparatus 100.

Further, if a valve opening of the electrically driven valve 1 (such as the current position (number of pulses) of the stepping motor of the electrically driven valve 1) or a rotation direction of a stepping motor is transmitted through the LIN bus 114 from the control apparatus 100, the valve opening or the direction of rotation may be transmitted (notified) to the ECU 116 via the LIN bus 114.

The valve opening information is an information related to a valve opening of the electrically driven valve 1, and for example, information such as a rotational position of the stepping motor of the electrically driven valve 1, the number of pulses, and the valve element position of the electrically driven valve 1 are included. Further, a maximum number of pulses is the number of pulses applied to the stepping motor of the electrically driven valve 1 while the valve element moves from a lower limit position (limit position to which the valve element can be moved downward) of the valve element to an upper limit position (limit position to which the valve element can be moved upward), or the number of pulses applied to the stepping motor of the electrically driven valve 1 while the valve element moves from the upper limit position to the lower limit position, and for example, the lower limit position of the valve element is the fully closed position, and the upper limit position is the fully opened position. A current position of the valve element is a number of pulses that has been applied (increased or decreased) in the valve opening or the valve closing direction for moving the valve element between the fully closed position and the fully opened position, with the lower limit position of the valve element set as zero pulse. Of course, it may be possible to count the number of pulses applied with the upper limit position of the valve element set to zero pulse.

### (Air Conditioner for Vehicle)

As an example of a refrigeration cycle on which the electrically driven valve unit is installed, a case where an electrically driven valve (electrically driven valve unit) after shipping inspection has been assembled as an expansion valve to an air conditioner for a vehicle will be described. The control apparatus 100 performs flow rate control of refrigerant passing through the orifice 31d by communicating signals with a control apparatus (air conditioner ECU) for controlling the air conditioner for a vehicle and performing opening/closing control of the electrically driven valve 1 according to instructions from the air conditioner ECU. In this state, at least an amount of hysteresis (or a number of pulses corresponding thereto) measured by the inspection process is stored in a nonvolatile memory (the EEPROM 111e) of the control apparatus 100, and it is even more preferable to have the valve opening pulse stored therein.

In a case where the electrically driven valve unit is used as an expansion valve of the air conditioner for a vehicle, the control apparatus 100 having received an initialization instruction signal performs an initialization processing (initialization operation of the electrically driven valve 1) (initial positioning of zero pulse) in which the stepping motor of the electrically driven valve 1 is rotated in the valve closing direction for a number of pulses (such as 700 pulses or more) in which a number of pulses sufficient to collide the rotator against the stopper (rotation stopper) without fail is added to a maximum number of pulses (such as 500 pulses) controllable by the electrically driven valve 1. In the case of an electrically driven valve without a stopper, a position where the valve element is seated in a valve seat and stopped is assumed to be the position at which the valve element collides against the stopper.

Further, an initialization processing of rotating the stepping motor of the electrically driven valve 1 in the valve opening direction may be performed instead of the initialization processing of rotating the same in the valve closing direction. Further, if a current position (number of pulses) of the stepping motor of the electrically driven valve 1 is stored in the EEPROM 111e, the information may be read from the EEPROM 111e and used. If the control apparatus 100 does not recognize the current position (number of pulses) of the stepping motor of the electrically driven valve 1, the initialization process may be executed by receiving a support of changing the valve opening from a host control apparatus such as the air conditioner ECU.

Normally, the microcomputer 111b of the control apparatus 100 controls the valve opening of the electrically driven valve 1 based on a control signal transmitted from the air conditioner ECU (hereinafter sometimes simply referred to as ECU) through a communication bus (such as a LIN bus) which is a signal transmission and reception line, but in a case where a power cutoff signal or a sleep mode transition signal has been received from the ECU, for example, the operation of the electrically driven valve 1 during operation is stopped, and the valve opening information of the electrically driven valve 1 and the direction of rotation thereof (of the stepping motor of the electrically driven valve 1) at that time (current time) may be stored in the EEPROM 111e. Further, an abnormal termination flag for notifying an end state of the control apparatus 100, such as a sudden cutoff of power due to short circuit or cutting of a lead wire, is prepared in advance in the microcomputer 111b, and the microcomputer 111b may also store the state of the abnormal termination flag in the EEPROM 111e.

Furthermore, if the valve opening of the electrically driven valve 1 (that is, the current position (number of pulses) of the stepping motor of the electrically driven valve 1) or the rotation direction of the stepping motor has been transmitted from the control apparatus 100 via the LIN bus, such valve opening and direction of rotation may also be transmitted (notified) to the ECU 116 via the LIN bus.

### (Measurement of Valve Opening Pulse and Amount of Hysteresis by Measurement Apparatus)

Next, a measurement of an amount of hysteresis using a measurement apparatus composed of the control apparatus 100 and the inspection apparatus 200 will be described. The measurement apparatus is assembled with the corresponding control apparatus 100 after the electrically driven valve 1 has been completed, and the measurement of the amount of hysteresis is performed before shipping. The electrically driven valve 1 and the control apparatus 100 subjected to measurement are associated and shipped.

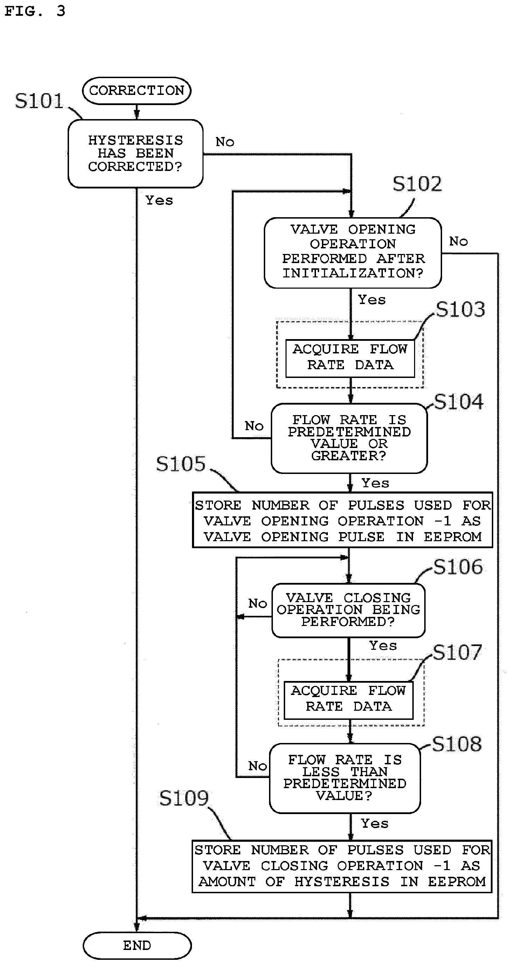

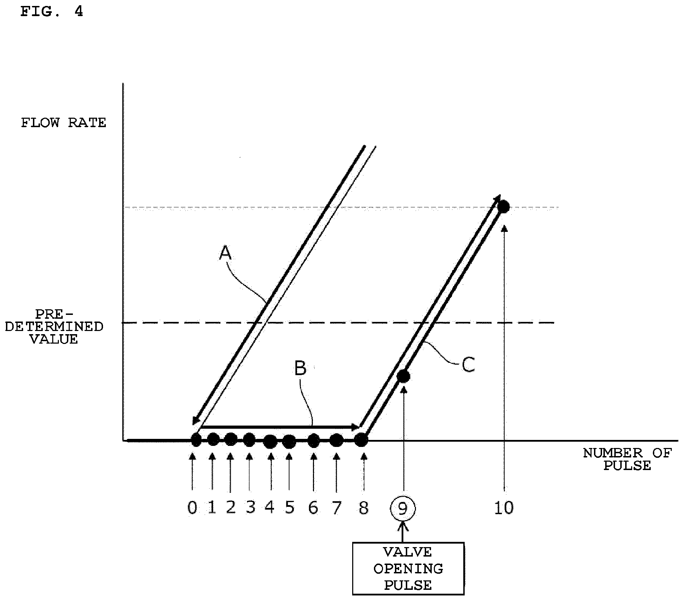

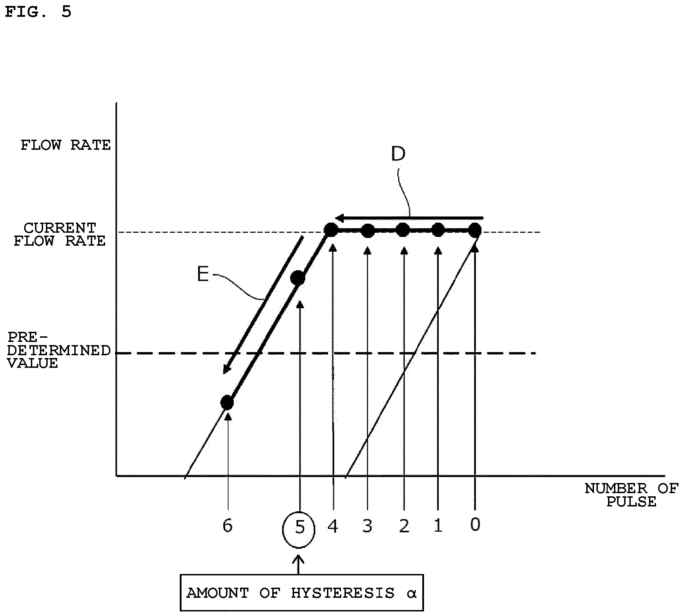

FIG. 3 is a flowchart illustrating a flow for measuring the amount of hysteresis. FIGs. 4 and 5 are each a hysteresis diagram that shows the relationship between a drive pulse entered to the stepping motor of the electrically driven valve 1 and a flow rate. The measurement of the amount of hysteresis is performed for each electrically driven valve 1, since there is an individual difference in the amount of hysteresis for each electrically driven valve due, for example, to the backlash of the gear train of the electrically driven valve 1 or the conversion mechanism.

At first, in step S101 of FIG. 3, the ECU 116 serving as a measurement control unit determines whether measurement of the amount of hysteresis has been performed in the electrically driven valve 1 being the measurement target. Information that the measurement of the amount of hysteresis has been performed is stored in the EEPROM 111e of the control apparatus 100 of the electrically driven valve 1 being the measurement target, so that by reading the information, the ECU 116 may recognize whether the measurement of the amount of hysteresis has been performed in the electrically driven valve 1 being the measurement target. If the measurement of the amount of hysteresis has been performed in the electrically driven valve 1 being the measurement target (determination Yes), the flow is ended immediately. Meanwhile, if the measurement of the amount of hysteresis has not been performed in the electrically driven valve 1 being the measurement target (determination No), the flow is advanced to step S102.

The ECU 116 determines whether a valve opening operation has been executed after initialization in step S102. If the valve opening operation has not been executed after initialization (determination No), the flow is ended immediately. Meanwhile, if the valve opening operation has been executed after initialization (determination Yes), the flow is advanced to step S103.

The valve opening operation after initialization will be described. In a state where the ECU 116 outputs an initialization command to the electrically driven valve 1 through the control apparatus 100, the valve element 33 is moved toward the valve closing direction from the valve opened state by having a drive pulse of a predetermined number of pulses being entered to the stepping motor (arrow A of FIG. 4). In this state, the flowmeter 204 of the control apparatus 100 measures the amount of air flowing through the electrically driven valve 1 (step S103). In a state where the amount of air measured by the flowmeter 204 is zero, the valve is in a valve closed state. In this state, the valve element 33 rests at a position stopped at the valve closed position (initialization), which is the initial position (zero pulse) of the electrically driven valve 1.

To open the valve from the valve closed state, the ECU 116 enters a drive pulse to the stepping motor of the electrically driven valve 1 via the control apparatus 100 by increasing the number of pulses one pulse at a time (arrow B of FIG. 4), and each time the drive pulse is entered, the flowmeter 204 measures the amount of air flowing through the electrically driven valve 1.

In step S104, the ECU 116 determines whether the flow rate measured by the flowmeter 204 has reached a predetermined value or more. If the number of pulses has exceeded a certain value (if the number of pulses has reached nine pulses along the arrow C of FIG. 4), it is assumed that the flowmeter 204 of the control apparatus 100 has measured a flow rate exceeding zero. If the ECU 116 determines that the flow rate is less than the predetermined value, the flow is returned to step S102.

Meanwhile, if the ECU 116 determines that the flow rate measured by the flowmeter 204 has reached the predetermined value or more (number of pulses has reached 10 pulses in FIG. 4), in step S105, the number of pulses of a state where the flow rate has reached the predetermined value or more -1 is determined as the valve opening pulse (which is 9 pulses in this case), and the determined value is stored in the EEPROM 111e of the control apparatus 100. The above description describes the valve opening operation after initialization.

The number of pulses from the initial position to the valve opening point according to the present embodiment includes a backlash of the gear train and the conversion mechanism etc., the relative displacement of the valve stem 32 and the valve element 33 as described later, and the number of pulses corresponding to the operation from the start of operation of the valve element to the operation reaching a flow rate of the predetermined value.

The backlash of the gear train and the conversion mechanism etc. corresponds to an amount of hysteresis α described later, and a relative displacement of the valve stem 32 and the valve element 33 corresponds to a pressing amount for closing valve δ. The pressing amount for closing valve δ mainly includes a sliding distance of the slide plate 40 and outer circumference of the large diameter portion 32b of the valve stem 32, but it also includes an elastic deformation of a metal material such as the valve stem, the valve body, the valve seat and so on. Therefore, the valve opening pulse is the number of pulses corresponding to (amount of hysteresis α + pressing amount for closing valve δ). In the following description, α (and α1 and α2 described later) is assumed as the number of pulses corresponding to the amount of hysteresis, and δ is assumed as the number of pulses corresponding to the pressing amount for closing valve.

In other words, when the motor is rotated from the position stopped for initialization (initial position) to the valve opening direction, after driving the backlash and the relative displacement, the valve element is operated in the valve opening direction, and thereafter, reaches the valve opening point.

The backlash of the gear train and the conversion mechanism etc. includes a backlash of the gear and the backlash of screw of the conversion mechanism, and as described later, the backlash of the gear train and the conversion mechanism etc. may be varied over time, such as by abrasion.

Next, the ECU 116 determines whether the valve closing operation has been executed in step S106. If the valve closing operation has not been executed, the procedure waits for the valve closing operation to be started. Meanwhile, if the valve closing operation has been executed (that is, if the valve element 33 has been driven in the valve opening direction before the stepping motor rests, and the valve element 33 has been driven successively in the valve closing direction: refer to FIG. 5), the flow is advanced to step S107.

The valve closing operation will be described. With reference to FIG. 5, if the ECU 116 outputs a valve closing operation instruction to the electrically driven valve 1 through the control apparatus 100, drive pulse is entered to the stepping motor, and the valve element 33 moves toward the valve closing direction from the current valve opening position. In this state, the flowmeter 204 of the control apparatus 100 measures the amount of air flowing through the electrically driven valve 1 (initial flow rate) (step S107).

The ECU 116 increases the number of pulses of the drive pulse entered to the electrically driven valve 1 through the control apparatus 100 one pulse at a time toward the valve closing direction (arrow D of FIG. 5), and each time the pulse is entered, the flowmeter 204 measures the amount of air flowing through the electrically driven valve 1.

According to the present embodiment, the graph of FIG. 5 is continued from the graph of FIG. 4, and the number of pulses 0 of FIG. 5 corresponds to the number of pulses 10 of FIG. 4 (that is, the valve opening pulse), but the number of pulses 0 of FIG. 5 may be the valve opening pulse +1.

In step S108, the ECU 116 determines whether the flow rate measured by the flowmeter 204 has fallen below a predetermined value (flow rate that has changed for a predetermined amount from the initial flow rate). If the flow rate measured by the flowmeter 204 has not fallen below the predetermined value, the flow is returned to step S106.

If the flow rate measured by the flowmeter 204 has fallen below the predetermined value (in FIG. 5, if the number of pulses has reached 6 pulses), the ECU 116 stores the number of pulses when the flow rate has fallen below the predetermine value -1 as an amount of hysteresis α (in the example, 5 pulses) in the EEPROM 111e of the control apparatus 100 in step S109. The above description is the valve closing operation. Thereafter, the flow is ended.

In the case where the electrically driven valve unit is used as the expansion valve of the air conditioner for a vehicle, by using the above-mentioned valve opening pulse and amount of hysteresis α for the valve opening control of the electrically driven valve unit, the flow rate control can be performed with high accuracy.

### (Operation of Electrically Driven Valve)

An operation of the electrically driven valve 1 according to the present embodiment in a state connected to a refrigeration cycle will be described. The first piping 51 and the second piping 52 are connected to the refrigeration cycle, wherein the first piping 51 serves as an inlet-side piping and the second piping 52 serves as an outlet-side piping. Further, the valve opening direction refers to a direction in which the valve element 33 separates from the valve seat 31e, and the valve closing direction refers to a direction in which the valve element 33 approaches the valve seat 31e.

When a command is received from an ECU of the refrigeration cycle etc. to control a flow rate of a refrigerant to realize a set temperature (that is, when an operation instruction information is entered to move the valve element 33 for a target movement amount), the control apparatus 100 outputs a drive pulse to the stepping motor of the electrically driven valve 1. Based on a target movement amount of the valve element 33 determined based on the adjusted flow rate of refrigerant and considering a reduction ratio of the driving mechanism, a target rotation angle of the rotor 13 of the stepping motor is determined. The number of driving pulses for realizing the target rotation angle is referred to as a target number of pulses. The calculation of the target number of pulses is performed by the microcomputer 111b.

In this state, if the valve element 33 moves in the valve closing direction and thereafter moves further in the valve closing direction (same direction), or if the valve element 33 moves in the valve opening direction and thereafter moves further in the valve opening direction (same direction), there is no need to consider hysteresis, such that the control apparatus 100 outputs a drive pulse corresponding to the target number of pulses to the stepping motor of the electrically driven valve 1. Thereby, the rotor 13 of the stepping motor rotates for an amount corresponding to the target rotation angle.

Meanwhile, if the valve element 33 moves in the valve closing direction before resting and thereafter moves in the valve opening direction (opposite direction), or if the valve element 33 moves in the valve opening direction before resting and thereafter moves in the valve closing direction (opposite direction), there is a need to consider the hysteresis of the driving mechanism. In such a case, the microcomputer 111b adds an amount of hysteresis α (5 pulses) stored in the EEPROM 111e to a target number of pulses β to acquires an effective number of pulses γ, and the control apparatus 100 outputs a drive pulse of the effective number of pulses γ instead of the target number of pulses to the stepping motor of the electrically driven valve 1. Thereby, the rotor 13 of the stepping motor rotates beyond the target rotation angle considering hysteresis, but the valve element 33 reaches the target position with high accuracy.

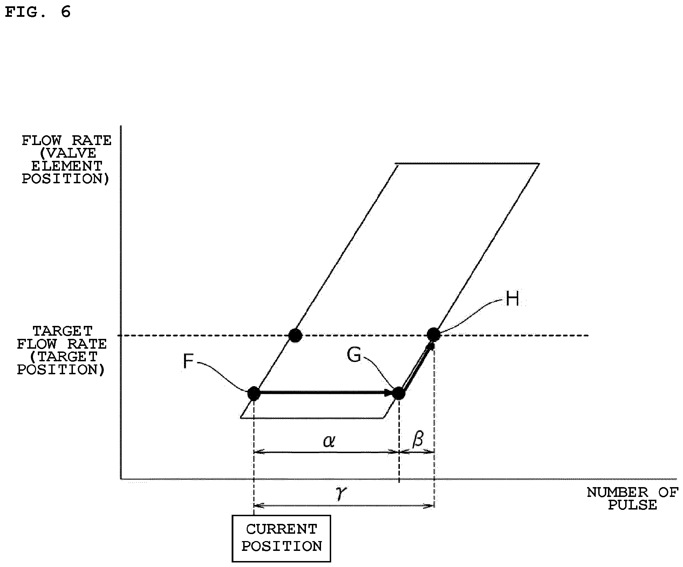

Specifically, the control apparatus 100 enters to the stepping motor a drive pulse of the effective number of pulses γ having added the amount of hysteresis α (5 pulses) stored in the EEPROM 111e and a target number of pulses β necessary for the valve element 33 to move from point F to point G from the position of point F, according to the hysteresis diagram illustrated in FIG. 6. Thereby, the valve element 33 may reach the target position (point H) with high accuracy and a fluid of a target flow rate may be passed through the electrically driven valve 1. Similarly, even in a case where the stepping motor is driven in the valve opening direction and thereafter moved in the valve closing direction, the effective number of pulses γ may be acquired by adding the similarly obtained amount of hysteresis α to the target number of pulses.

### (Valve Closing Operation)

When the valve element 33 is in an arbitrary position (excluding the valve closed state), if the drive shaft 14 rotates in the valve closing direction, the rotational movement is reduced through the gear train of the reduction unit 20 and transmitted to the male screw shaft 27. The rotational movement transmitted to the male screw shaft 27 is converted via a conversion mechanism of the reduction unit 20 into an axial direction movement, by which the male screw shaft 27 is displaced downward together with the final gear 26. Even in a case where the final gear 26 is displaced in the axial direction, the meshing thereof with the second transmission gear 25 will not be disengaged.

When the male screw shaft 27 is displaced downward, the valve stem 32 moves downward by being pressed via the ball 37. In a state where the valve stem 32 moves downward, the bellows 38 expands, the valve element 33 moves downward in a state being pressed by the coil spring 39, and the tapered surface 33d is seated on the valve seat 31e. In this state, the coil spring 39 exerts a shock absorbing effect of weakening the shock of seating.

Further, by the rotation of the valve stem 32, the valve stem 32 is lowered and the coil spring 39 is compressed, by which the tapered surface 33d is pressed against the valve seat 31e with a predetermined urging force. In this state, the slide plate 40 moves in sliding motion along the outer circumference of the large diameter portion 32b of the valve stem 32, allowing the valve stem 32 and the valve element 33 to be relatively displaced against the urging force of the coil spring 39. As described above, since a predetermined preload is applied and the valve closed state is ensured, the flow of refrigerant from the first piping 51 through the valve chamber C toward the second piping 52 is cutoff. The electrically driven valve of FIG. 1 is in this state (that is, the valve closed state).

Further during this state, fluid pressure within the valve chamber C acts on the outer surface of the bellows 38, such that if fluid pressure of a predetermined value or more acts thereon, the bellows 38 is moved in the expanding direction, and the valve element 33 may be moved in the opening direction together with the valve stem 32.

### (Valve Opening Operation)

If the valve element 33 is in an arbitrary position (excluding the maximum valve opened state), if a drive pulse is output from the control apparatus 100 to the stepping motor and the drive shaft 14 rotates in the valve opening direction, the force is reduced through the gear train of the reduction unit 20 and transmitted to the male screw shaft 27.

The rotary motion transmitted to the male screw shaft 27 is converted into an axial direction movement through the conversion mechanism of the reduction unit 20, and thereby, the male screw shaft 27 is displaced upward together with the final gear 26.

In a state where the male screw shaft 27 is displaced upward, the force pressing the valve stem 32 toward the valve closing direction is lost, such that the bellows 38 receiving refrigerant pressure within the valve chamber C expands and the valve stem 32 elevates. In a state where the valve stem 32 elevates, the slide plate 40 is locked by the flange portion 32c of the valve stem 32, and thereafter, the valve element 33 elevates together with the valve stem 32, such that the tapered surface 33d separates from the valve seat 31e.

In this state, the refrigerant entering the valve chamber C from the first piping 51 passes through a gap formed between the tapered surface 33d and the valve seat 31e, and flows out through the orifice 31d into the second piping 52. Since the gap between the tapered surface 33d and the valve seat 31e varies according to the rotation angle of the drive shaft 14, by adjusting the rotation angle of the drive shaft 14, the amount of refrigerant flowing from the first piping 51 to the second piping 52 may be adjusted.

### (Variation over Time of Electrically Driven Valve)

Backlash of the gear train or the conversion mechanism etc. of the electrically driven valve 1 changes over time by abrasion or the like, and generally increases. Therefore, the amount of hysteresis that has been initially acquired is considered to be varied along with the use of the electrically driven valve 1. In contrast, the control apparatus according to the present embodiment can cope with the variation over time of the amount of hysteresis.

Specifically, a change in the amount of hysteresis with respect to the integrated value of drive pulse entered to the stepping motor is acquired in advance through experiments and simulations, for example, and a table having associated the integrated value and the change in the amount of hysteresis or a correlation equation thereof is determined and stored in the EEPROM 111e.

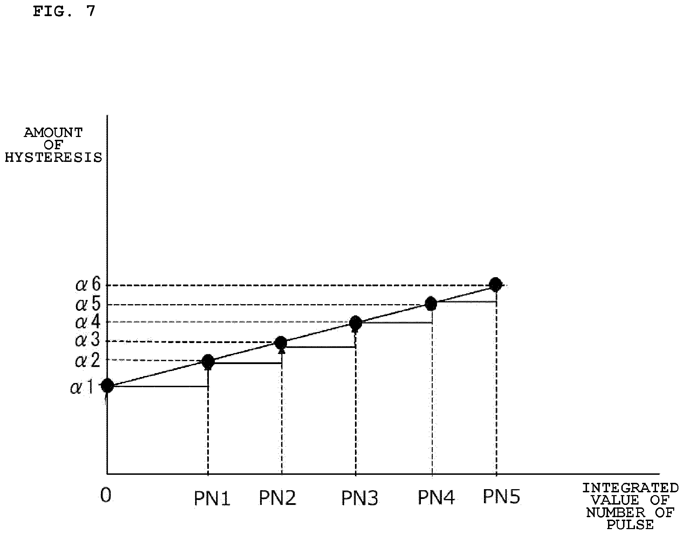

FIG. 7 is a graph illustrating an association of an integrated value of drive pulse and an amount of hysteresis.

Every time a drive pulse is output to the stepping motor, the control apparatus 100 of the electrically driven valve 1 counts the number of pulses of the drive pulse, and verifies the integrated value of the number of pulses with the table or correlation equation stored in the EEPROM 111e to determine the amount of hysteresis.

Specifically, in the example of FIG. 7, in a state where the integrated value of the number of pulses is between 0 and PN1, the amount of hysteresis is set to α1. Further, in a state where the integrated value of the number of pulses is between PN1 and PN2, the amount of hysteresis is set to α2. The same applies thereafter. It may also be possible to increase the amount of hysteresis linearly as the integrated value increases. Moreover, in addition to the integrated value of the number of pulses, the amount of lubricant supplied to the electrically driven valve 1 or the load applied while closing the valve may be measured to adjust the amount of hysteresis.

As described, by determining the amount of hysteresis according to the integrated value of the number of pulses, the control of the valve element may be performed with high accuracy even if variation with time of the electrically driven valve 1 occurs.

### (Modified Example)

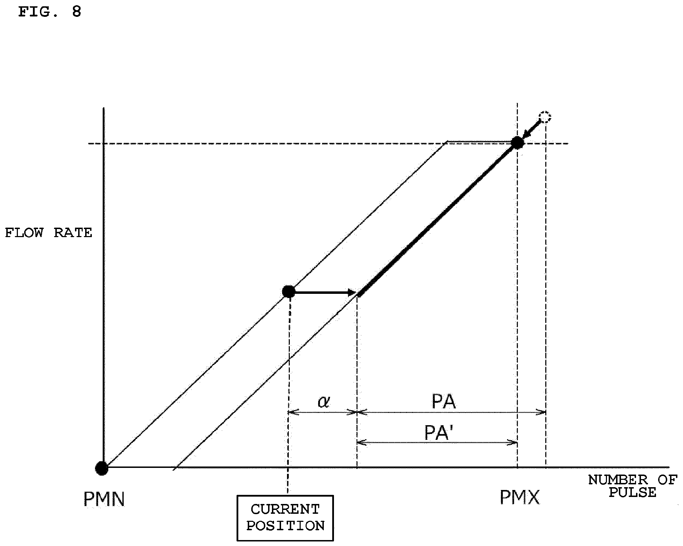

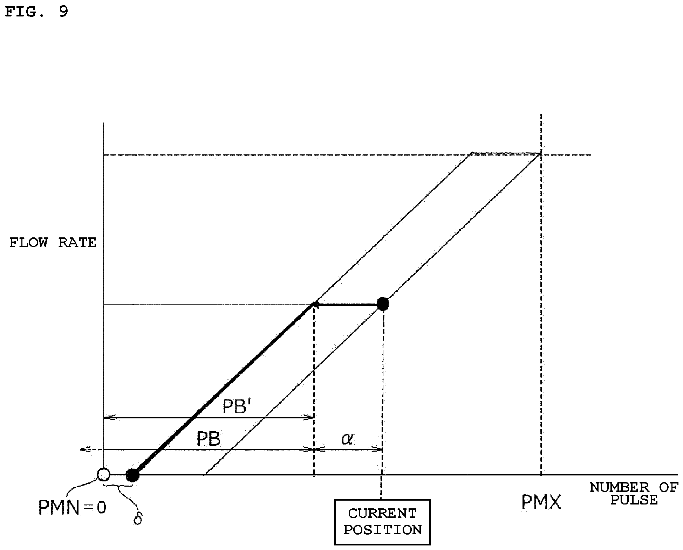

FIGs. 8 and 9 are each a hysteresis diagram according to a modified example of the present embodiment.

A minimum number of pulses PMN and a maximum number of pulses PMX that may be entered to the stepping motor according to the movable range of the valve element 33 of the electrically driven valve 1 are each determined as a specified value. If the drive pulse of a number of pulses either falling below the minimum number of pulses PMN or exceeding the maximum number of pulses PMX is entered to the stepping motor, a step-out phenomenon may occur and control may be disabled. The present modified example may cope with such a problem.

For example, in FIG. 8, if a drive pulse of the target number of pulses PA is to be entered to the stepping motor to drive the valve element 33 that has been driven in the valve closing direction to the valve opening direction, the control apparatus 100 enters an operation instruction pulse of an effective number of pulses having added the amount of hysteresis α to the target number of pulses PA by adding the value to the current position (current pulse value). However, if PA + α > PMX, a step-out phenomenon may occur by entering the drive pulse corresponding to the computed effective number of pulses to the stepping motor.

Similarly, in FIG. 9, when entering a drive pulse of the target number of pulses PB to drive the valve element 33 that has been driven in the valve opening direction to the valve closing direction, the control apparatus 100 enters the drive pulse of an effective number of pulses (PB + α) having added the amount of hysteresis α to the target number of pulses PB by subtracting the value from the current position (current pulse value). However, if the current position - (PB + α) < PMN, a step-out phenomenon may occur by entering the drive pulse corresponding to the effective number of pulses to the stepping motor.

Therefore, when the effective number of pulses (PA + α) or (PB + α) are computed, if PA + α > PMX, the control apparatus 100 enters a drive pulse of the number of pulses (PA' + α) that is equal to the number of pulses PMX to the stepping motor, and if the current position - (PB + α) < PMN, the control apparatus 100 enters a drive pulse of the number of pulses (PB' + α) that is equal to the number of pulses PMN to the stepping motor. Thereby, the step-out phenomenon of the stepping motor may be suppressed.

### (Modified Example 2)

The number of pulses from the valve closed state to the valve opening point includes an amount of hysteresis α (which is 5 pulses according to the above-mentioned embodiment) and a pressing amount for closing valve δ (which is 4 pulses according to the above-mentioned embodiment), wherein since the flow rate of fluid passing through the electrically driven valve between the number of pulses PMN to (PMN + δ) is equal to or less than a predetermined flow rate (which substantially is zero flow rate), there is no need to strictly realize PMN = 0 by the drive pulse entered to the stepping motor. Further, since the number of pulses PMN corresponds to the position stopped for initialization (initial position), load is applied to the gear or the screw when the number of pulses PMN is entered to the stepping motor. Therefore, in the above-mentioned control, when entering the target number of pulses PB (or PB + α), {that is, if the (current position - (PB + α) is equal to or less than the number of pulses PMN}, it is possible to enter a drive pulse that exceeds the number of pulses PMN and that is equal to or less than PMN + δ to the stepping motor. For example, if the pressing amount for closing valve δ is 1 pulse or greater, the number of pulses that realizes PMN + 1 may be entered. By realizing such control, load applied to the gear or the screw may be reduced, and power consumption or abrasion may be reduced.

Regardless of the above-mentioned embodiments, various other embodiments and modified examples of the present invention may be applied.

### [Reference Signs List]

1 electrically driven valve
10 driving unit
20 reduction unit
30 valve mechanism unit
31 valve body
32 valve stem
33 valve element
100 control apparatus
200 inspection apparatus

## Claims

1. A control apparatus of an electrically driven valve comprising:
a valve element configured to move to a direction approaching a valve seat or to a direction separating therefrom, a stepping motor configured to be operated by entering a drive pulse, a driving mechanism configured to drive the valve element by a driving force output from the stepping motor, a nonvolatile storage unit, and a control unit configured to drive the stepping motor according to an operation instruction information entered from an exterior,
wherein the storage unit is configured to store an amount of hysteresis, and
wherein, based on the operation instruction information entered from the exterior, when moving the valve element to a direction that differs from a direction of movement immediately prior thereto, the control unit enters to the stepping motor a drive pulse of an effective number of pulses having added a number of pulses corresponding to the amount of hysteresis stored in the storage unit to a target number of pulses corresponding to a target movement amount of the valve element.

2. The control apparatus of an electrically driven valve according to claim 1,
wherein the control unit causes the stepping motor to rest after moving the valve element in one direction, acquires a flow rate of fluid passing through the valve element and the valve seat at that time as an initial flow rate, and thereafter, acquires the flow rate of fluid each time a number of pulses of the drive pulse entered to the stepping motor to move the valve element to another direction is increased, and stores a number of pulses at a point of time when a flow rate that has been varied from the initial flow rate has become equal to a predetermined amount or more for the first time -1 as the amount of hysteresis in the storage unit.

3. The control apparatus of an electrically driven valve according to claim 1,
wherein, based on an operation instruction information entered from the exterior, the control unit enters a drive pulse of the target number of pulses to the stepping motor when moving the valve element to a direction that is the same as the direction of movement immediately prior thereto.

4. The control apparatus of an electrically driven valve according to claim 1,
wherein the amount of hysteresis is varied according to an integrated value of the number of pulses of the drive pulse being entered to the electrically driven valve.

5. The control apparatus of an electrically driven valve according to claim 1,
wherein, if a value having added the effective number of pulses to a current value exceeds a specified value, or if a value having subtracted the effective number of pulses from a current value falls below a specific value, the drive pulse of the specified value is entered to the stepping motor.

6. The control apparatus of an electrically driven valve according to claim 1,
wherein, if a value having subtracted the effective number of pulses from a current value falls below a specified value, a drive pulse that exceeds the specified value and that is equal to or smaller than a value having added a number of pulses corresponding to a pressing amount for closing the valve to the specified value is entered to the stepping motor.

7. An electrically driven valve comprising:
a valve element configured to move to a direction approaching a valve seat or to a direction separating therefrom, a stepping motor configured to be operated by entering a drive pulse, a driving mechanism configured to drive the valve element by a driving force output from the stepping motor, a nonvolatile storage unit, and a control unit configured to drive the stepping motor according to an operation instruction information entered from an exterior,
wherein the storage unit is configured to store an amount of hysteresis, and
wherein, based on the operation instruction information entered from the exterior, when moving the valve element to a direction that differs from a direction of movement immediately prior thereto, the control unit enters to the stepping motor a drive pulse of an effective number of pulses having added a number of pulses corresponding to the amount of hysteresis stored in the storage unit to a target number of pulses corresponding to a target movement amount of the valve element.

8. An electrically driven valve unit comprising the control apparatus according to any one of claims 1 to 6, and an electrically driven valve.
